# EUROPEAN PATENT APPLICATION

(11) **EP 0 959 410 A2**
(43) Date of publication of application: **24.11.1999**
(21) Application number: 99303744.9
(22) Date of filing: 13.05.1999
(51) Int. Cl.: G06F 12/08

(54) **Computing devices**

(30) Priority: 16.05.1998 US 80169
(71) Applicant: Network Virtual Systems Inc., San Jose, CA 95110-1016 (US)
(72) Inventor: Quinn, Robert F., Campbell, CA 95008 (US); Akkawi, Isam, Aptos, CA 95003 (US); Donley, Greggory D., Sunnyvale, CA 94086 (US)
(74) Representative: Spoor, Brian

(57) **Abstract**

A network of computing devices according to the present invention includes at least one memory server computing device, each memory server including server memory and at least one client computing device, each client having at least a portion of its memory space mapped into the memory space of at least one of the memory server computing devices. A network memory controller is attached to each client, the network memory controller being configured to access the server memory of at least one of the memory server computing devices over the network and including a cache memory for storing copies of memory locations fetched from the server memory. A method of allocating and managing memory resources in a network of computing devices, each of the computing devices including a network memory controller having cache memory, according to the present invention, includes steps of mapping at least a portion of the memory space of at least one of the computing devices into a memory space of at least one other computing device within the network; responding to a request for access to a memory location from a computing device by first checking the cache memory of its associated network memory controller for the requested memory location; and accessing the memory of the at least one computing device when the requested memory location is not present in the requesting computing device's network memory controller cache memory.

## Description

The invention pertains to the field of computing devices. Specifically, the present invention relates to the field of memory for computing devices in a networked environment.

Computers are ubiquitous in today's business and scientific environments. Moreover, it has become common practice to interconnect individual computers, to share and control computing resources and data. Such interconnected computers facilitate communication between users, provide centralized management of software and allow a great degree of control over the access and distribution of data, among other benefits. Several levels of interconnectivity have emerged, such as Local Area Networks (LANs), Wide Area Networks (WANs), corporate intranets and the Internet, among others.

One possible implementation of LANs, for example, calls for both programs and data to reside on a server that, upon request, sends requested program code and/or data to one or more client computers connected thereto. The client computers then locally store the programs and/or data on their local mass storage device and/or in random access memory (RAM). Alternatively, the programs may reside on the mass storage device of the clients, and the data may be stored on the server, and be provided to the client computers upon request. Many different variants of such network architectures have emerged and are in common usage today.

When first introduced, personal computers (commonly known as "PCs") had only a few Kb of user accessible memory. Today's personal computers typically have 32Mb of local RAM memory, and future personal computers will likely include far more RAM, as the applications resident thereon become increasingly demanding of large amounts of memory. This trend toward ever-greater RAM requirements in personal computers is accentuated in computers and workstations used in the business and scientific arenas, where workstations now typically have 128Mb to 512Mb of local RAM memory. Such large memory requirements are primarily due to the need for and availability of highly complex, computationally intensive applications. Data warehousing, data mining and financial analysis and forecasting software are examples of applications that place high demands upon the host computer's memory. Others examples include simulation programs and generally any applications that include heavily recursive and/or data-intensive algorithms.

Historically, the amount of local RAM available in most computers has not kept pace with the needs of such complex applications and operating systems, primarily due to the high cost of large amounts of memory. Moreover, modern operating systems typically allow several applications to be run more or less simultaneously. Computers or workstations, however, seldom have sufficient local memory resources to keep a full copy of all programs and data in memory simultaneously and much less to keep a copy of each application and data set in local RAM memory. One solution that has been extensively utilized to overcome such RAM deficiency is a method wherein predetermined ranges of memory address space, called pages, are swapped into and out of local mass storage, such as a local hard disk drive. According to this method, the virtual memory space of the workstation may be far greater than the physical memory space available to it. To do this, pages of memory that are not immediately needed are temporarily stored onto a local disk, thus freeing up available RAM memory space. When the data and/or program code stored on disk is again required, it is swapped back into RAM, and the program and/or data previously resident in RAM may be itself swapped to disk. A special file (often called a swap file) is maintained on disk, and pages swapped out of memory are stored in this swap file.

The access times of currently available optical, magnetic or magneto-optical drives, however, are generally at least two orders of magnitude slower than common access times for semiconductor memories, such as dynamic random access memory (hereafter DRAM). Thus, while providing the illusion of a far greater memory space than physically exists on the host computer, the process of swapping pages into and out of local disk necessarily degrades the performance of the host computer and, therefore, the execution speed of the applications loaded thereon.

One available remedial measure is to add sufficient DRAM memory to each host computer to allow it to run all intended programs without resorting to performance degrading measures such as memory swapping techniques. However, although the cost per megabyte (hereafter Mb) of DRAM chips historically has exhibited a generally downward trend, the appetite of modern software packages for ever larger amounts of memory appears to be unsatiable. Therefore, the cost of adding large amounts of DRAM to each workstation or PC on a network may become prohibitive, not only in terms of the cost of the DRAM itself, but also in terms of ancillary costs, such as the cost of labor and the costs associated with computer down time during the upgrade process.

Moreover, even if each workstation or PC were to be equipped with large amounts of memory, much of that memory would typically sit idle much of the time. Indeed, memory intensive application may not be running all of the time, such as nights and weekends. Also, such memory hungry applications may only need to be run infrequently, such as after a particular data set has been gathered, or at weekly or monthly intervals. Therefore, although large amounts of DRAM are typically needed in modern workstations and PCs, much of that resource remains idle much of the time.

What is needed, therefore, are means for economically providing computing devices with large amounts of random access memory without the degradation in performance associated with swapping pages of memory to an electro-mechanical mass storage device. What is also needed is a novel computing devices and network architectures with improved memory management features. Also needed is a method for allocating and managing memory resources that addresses the issue of duplicative, expensive and often idle memory. Indeed, there has been a long felt need for means and methods to efficiently and economically provide network computers and workstations with only that memory which is required and for only that period of time for which the memory is required.

### SUMMARY OF THE INVENTION

In accordance with the above-described objects and those that will be mentioned and will become apparent below, a network of computing devices, according to an embodiment of the present invention, comprises:
at least one memory server computing device, each memory server including server memory;
at least one client computing device, each client having at least a portion of its memory space mapped into a memory space of at least one of the memory servers;
a network memory controller attached to each client, the network memory controller being configured to access the server memory of at least one of the memory servers over the network and including a network memory controller cache memory for storing copies of memory locations fetched from the server memory; and
a network memory controller attached to each memory server, the network memory controller of the memory server being configured to supply contents of lines of server memory across the network when requested by the network memory controller of a client.

According to other exemplary embodiments, the network memory controller of the memory server may include cache memory for storing copies of memory locations accessed over the network. One or more clients may be constructed without random access memory and all of a memory space of such memory-less clients may be mapped into a memory space of the server memory of the memory server or servers. One or more clients may include random access memory physically connected thereto. One or more of the clients including random access memory may function as a memory server for one or more clients on the network. The cache memory may comprise dynamic random access memory (DRAM). The server memory may comprise read only and/or read-write memory to which a portion or all of the memory space of one or more client computing devices is mapped. The read only memory of the memory server may store application code and/or operating system code, thereby reducing local storage requirements in the at least one client computing device. One or more segments of the server memory may be designated as client computing device accessible data space, each segment being accessible to one or more client computing devices and utilized as a temporary random access data storage area.

According to another preferred embodiment, a method of allocating and managing memory resources in a network of computing devices, each of the computing devices including a network memory controller having cache memory according to the present invention comprises the steps of:
mapping at least a portion of a memory space of at least one of the computing devices into a memory space of at least one other computing device within the network;
responding to a request for access to a memory location from a computing device by first checking the cache memory of its associated network memory controller for the requested memory location; and
accessing the memory of the at least one other computing device when the requested memory location is not present in the requesting computing device's network memory controller's cache memory.

A step of returning a content of the requested memory location to the requesting computing device may be carried out when the requested memory location is present in the requesting computing device's network memory controller's cache memory. A step of returning the content of the requested memory location from the random access memory of the at least one other computing device to the requesting computing device may be carried out when the requested memory location is not present in the requesting computing device's network memory controller's cache memory. A step of storing a copy of the requested memory location returned from the random access memory in the requesting computing device's network memory controller's cache memory may also be carried out. The accessing step may also include a step of combining the requested memory location with a unique client identifier.

According to a still further embodiment, a computing device according to the present invention comprises:
at least one processor
a processor bus, the processor bus being connected to said at least one processor; and
a network memory controller attached to the processor bus; the network memory controller being configured to access memory physically remote from the computing device over a communication link and including a cache memory for storing copies of memory locations accessed from the remote memory, the network memory controller being configured to respond to all requests for access to memory locations by accessing the remote memory over the communication link unless the cache memory includes a copy of the requested memory locations.

The computing device may have no local random access memory physically connected to the processor bus. In that case, all memory accesses are carried out by the network memory controller. Alternatively, the computing device may comprise local random access memory. In that case, the network memory responds to all requests for access to memory locations that have been mapped to a memory server by accessing the remote memory over the communication link unless the cache memory includes a copy of the requested memory locations.

### BRIEF DESCRIPTION OF THE DRAWINGS

For a further understanding of the objects and advantages of the present invention, reference should be made to the following detailed description, taken in conjunction with the accompanying figures, in which:
Fig. 1 shows a block diagram of the major components of a computer or workstation.
Fig. 2 illustrates the manner in which computers or workstations may be connected to a network of such computers, such as a Local Area Network.
Fig. 3 depicts a memory-less computer connected, through a network, to a memory server according to an embodiment of the present invention.
Fig. 4 illustrates further embodiments of the network architecture and computing devices according to the present invention
Fig. 5 illustrate the manner in which the memory space of a client device may be mapped into a memory server's address space, according to an embodiment of the present invention.
Fig. 6 is a functional representation of the memory-mapping feature according to an embodiment of the present invention.

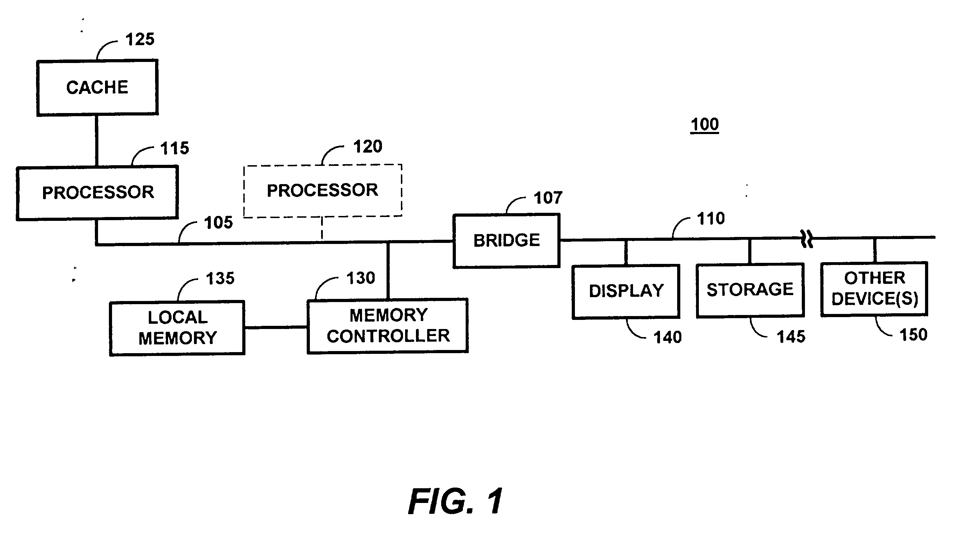

Fig. 1 shows a simplified functional block diagram of the major components of a computer or workstation 100. Reference numeral 105 designates the processor/memory bus. Attached to the processor/memory bus 105 is a processor 115. In a multiprocessor system, one or more additional processors 120 may be connected to the processor/memory bus 105. A cache memory 125 may be connected to the processor 115. Such cache memory may be what is commonly referred to as an L1 cache, meaning that it resides on the same die as the processor 115. Alternatively, the cache memory 125 may be an L2 cache that may reside, depending on the implementation, on the same die as the processor 115, on the processor/memory bus 105 or on a proprietary backside bus (not shown).

Also connected to the processor/memory bus 105 is the memory controller 130. The memory controller 130 controls the memory input/output (I/O) functions to and from the local memory 135 of the PC or workstation 100. The memory controller 130 also typically includes an interface to the processor/memory bus 105, to allow the local memory 135 to communicate with the processor 115, the processor 120 and any other processor that may be connected to the processor/memory bus 105. The local memory 135, typically DRAM, provides the working memory of the PC or workstation 100 into which applications and data are loaded for processing by the processor 115 and/or processor(s) 120. Depending upon the applications, the size of such local memory may currently range from about 16Mb-64 Mb for PCs to about 128Mb to 512Mb for workstations running complex simulations and other demanding applications.

Interconnecting the processor/memory bus 105 and system I/O bus 110 is a bridge 107. The system I/O bus 110 may be, for example, a PCI bus or some other bus architecture. Connected to the system I/O bus 110 are a number of devices, such as a display 140, one or more mass storage devices 145 and other devices, all generically referenced by numeral 150. For example, the functional block 150 may be a network controller, to allow the PC or workstation 100 to connect to and communicate over a local area network, or the like. A detailed description of these devices and the manner in which they interconnect to the system I/O bus 110 is omitted, as such details are well known to those of skill in this art.

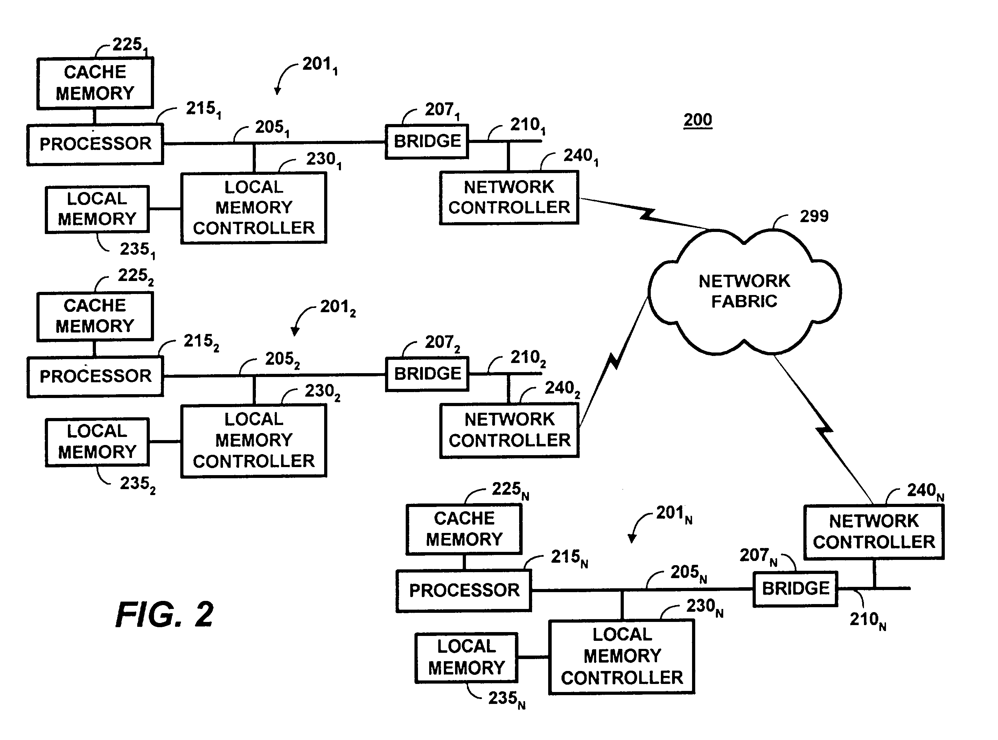

Fig. 2 shows a network 200 including a plurality of computers and/or workstations 201₁, 201₂ ... 201_{N} interconnected by a network fabric, shown stylistically at reference numeral 299. Each of the PCs or workstations 201₁, 201₂ ... 201_{N} may be similar to the PC or workstation 100 of Fig. 1 and include processor/memory busses 205₁, 205₂ ... 205₃ and system I/O busses 210₁, 210₂ ... 210₃. For clarity, the displays, storage units and other devices attached to the system I/O busses 210₁, 210₂ ... 210₃ have been omitted from Fig. 2. The computers or workstations 201₁, 201₂ ... 201_{N} may be interconnected via the network fabric 299 to form a hub-centric topology, wherein the network fabric 299 functions as a hub from which the connections to the constituent computers or workstations 201₁, 201₂ ... 201_{N} radiate. Alternatively, the computers or workstations 201₁, 201₂ ... 201_{N} may be interconnected via the network fabric 299 in a ring topology formed by serially connected computers or workstations 201₁, 201₂ ... 201_{N} that communicate by passing signals around the ring until the intended recipient is reached. Whatever the network topology, the PCs or workstations 201₁, 201₂ ... 201_{N} in Fig. 2 are interconnected by conventional memory controllers 240₁, 240₂ ... 240_{N} residing on the I/O busses 210₁, 210₂ ... 210₃ and each of the PCs or workstations 201₁, 201₂ ... 201_{N} includes local memory 235₁, 235₂ ... 235_{N} and a local memory controller 230₁, 230₂ ... 230_{N} residing on the processor/memory busses 205₁, 205₂ ... 205₃, respectively. The local memory controllers 230₁, 230₂ ... 230_{N} are connected to respective processor busses 205₁, 205₂ ... 205_{N}. The processors 215₁, 215₂ ... 215_{N} reside on the processor busses 205₁, 205₂ ... 205_{N}, respectively. Lastly, the cache memories 225₁, 225₂ ... 225_{N} may be connected to or may be integral with their respective processors 215₁, 215₂ ... 215_{N}.

Each of the constituent computers or workstations 201₁, 201₂ ... 201_{N} of the network 200 includes separate local memories 235₁, 235₂ ... 235_{N}. For at least the reasons discussed above, the aggregate amount of RAM of the local memories 235₁, 235₂ ... 235_{N} is a vast, costly, and often underutilized resource. Alternatively, the amount of RAM connected to each of the PCs or workstations 201₁, 201₂ ... 201_{N} may not be sufficient to efficiently run the necessary applications without resorting to performance degrading techniques such as swapping pages of memory to local electro-mechanical storage.

The present invention addresses these and other issues by redefining the function, operation and structure of both the server and client computing devices. In so doing, the present invention also redefines the architecture of the network itself, to allow a more efficient and economical use of available memory resources, greater functionality, and ease of maintenance and upgrades.

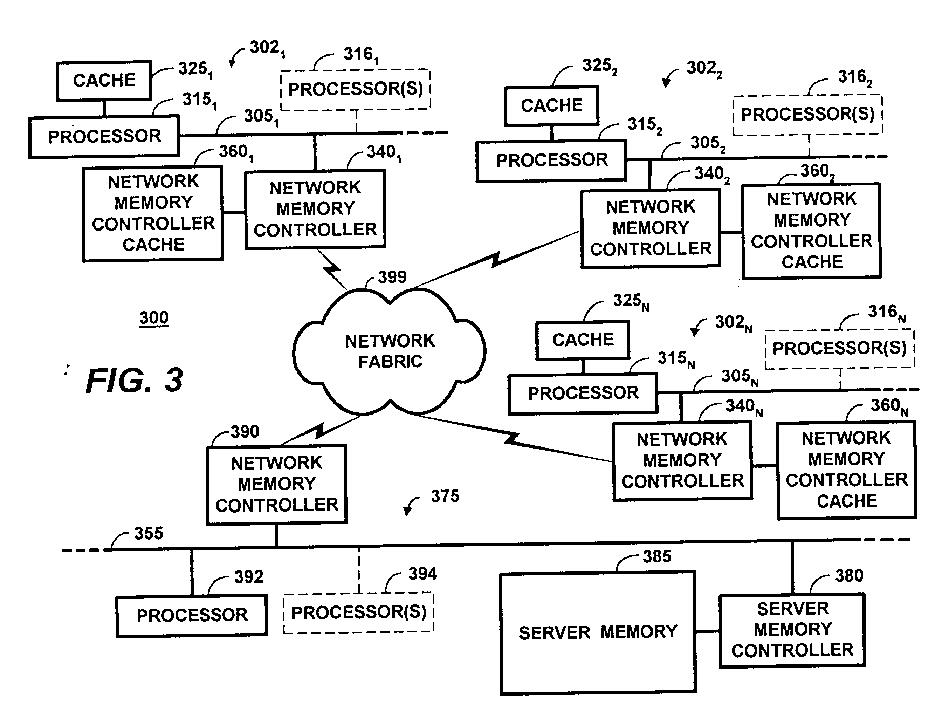

Within the context of the present invention, the terms "computing device", "computer" and "workstation" are used interchangeably and in a non-limiting fashion. Indeed, these terms are specifically defined herewith to include any type of device or appliance having at least some kind of compute engine and one or more I/O devices. The present invention, therefore, should not be limited to any particular type of computer, but should be understood to cover all devices, physical, virtual or simulated that possess one or more of the above enumerated functional units and characteristics. For example, the present invention is readily applicable to computers and workstations including one or more microprocessors manufactured by Intel Corporation of Santa Clara, CA running, for example, the Windows NT® operating system from Microsoft Corporation of Redmond, Washington. Other combinations of hardware and software are, of course possible, as those of skill in this art will recognize. Fig. 3 shows several aspects of the present inventions, each of which is discussed in turn below.

One embodiment of the present invention is shown at 300 in Fig. 3. Fig. 3 shows N computing devices according to the present invention at 302₁, 302₂ ... 302_{N}. The computing devices 302₁, 302₂ ... 302_{N} are similar to one another, and the description below is directed to only computing device 302₁, it being understood that this description also applies to the remaining computing devices 302₂ ... 302_{N}.

According to an embodiment of the present invention, the computing device 302₁ includes a network memory controller cache memory 360₁ that is integral with or connected to the network memory controller 340₁ A network memory controller 340₁ is connected to the processor bus 305₁, to which the processor 315₁ is connected. Additional processors may also be connected to the processor bus 305₁, as shown at reference numeral 316₁. A processor cache memory 325₁ may be connected to the processor 315₁ A number of conventional elements have been omitted from the illustrations of the computing devices 302₁, 302₂ shown in Fig. 3. These elements include, for example, the bus bridge, system I/O bus and the devices attached thereto, such as a conventional network controller for controlling traffic over the network 300. For clarity of illustration, such conventional elements are represented in Fig. 3 by the dashed lines terminating the processor bus 305₁.

The computing device 302₁ may, but need not include local RAM memory, as do the computers/workstations shown in Figs. 1 and 2. Indeed, the computing device 302₁ may rely upon its network memory controller cache memory 360₁ and upon memory that is remote to the computing device 302₁ for all or some of its random access memory requirements. Indeed, rather than incorporating a large amount of RAM in each computing device 302₁, 302₂ ... 302_{N} in the network 300, the present invention provides for computing devices 302₁, 302₂ ... 302_{N} that utilize a combination of server memory and cache memory 360₁. The server memory may, as shown in Fig. 3, reside in another remote computing device. As shown in Fig. 3, this remote computing device may be a memory server 375 having server memory 385 and one or more processors 392, 394. The server memory 385 is accessible by the computing devices 302₁, 302₂ ... 302_{N} over a network, symbolized in Fig. 3 by the cloud 399 labeled "Network Fabric". Accordingly, the computing device 375 may be called a memory server, while computing devices 302₁, 302₂ ... 302_{N} may be called memory clients.

According to one embodiment of the present invention, when computing device 302₁ requests access to a memory location to perform, for example, a read operation, the network memory controller 340₁ responds to the request. The network memory controller 340₁ passes the request for access to the memory location across the network 399 to the server memory 385 controlled by the server memory controller 380, through the memory server's network memory controller 390 connected between the processor bus 355 of the memory server 375 and the network fabric 399. The server memory 385 then returns the requested data to the network memory controller 340₁, again via the memory server's network controller 390. The requested data fetched from the server memory 385 via the network memory controller 340₁ is then provided to the processor 315₁ and/or to any other processors present on the processor bus 305₁, such as processor 316₁, as may be appropriate. However, network memory controller 340₁ not only provides the requested data to the processor 315₁ and/or 316₁, but it also keeps a copy thereof in its network memory controller cache memory 360₁. By virtue of its large size, the network memory controller cache memory 360₁ may maintain copies of large portions of data or code fetched from the server memory 385 of the memory server 375. Indeed, when future read or write requests are made by the processor 315₁ (or any other processors such as 316₁), the network memory controller 340₁ will first check the contents of its network memory controller cache memory 360₁. If the requested data or program code is in the network memory controller cache memory 360₁, the network memory controller 340₁ will then itself provide the requested data or program code to the processor 315₁. Thus, the read or write operation may be completed locally, i.e., without accessing the server memory 385 over the network 399, even if the computing device 302₁ does not include any conventional RAM at all, other than that present in the network memory controller 340₁. If the requested data or code is not located in the network memory controller cache memory 360₁, the network memory controller 340₁ will fetch the requested data or program code from the server memory 385 of the memory server 375 over the network 399, place a copy thereof in the network memory controller cache memory 360₁ and provide the requested data or program code to the processor 315₁ and/or processor(s) 316₁.

In this manner, even through the client computer 302₁ may not include any conventional RAM at all or only a small amount thereof, it is nevertheless able to access the a vast amount of server memory 385 of the memory server 375 as if this memory was its own RAM. Moreover, the process is transparent to the processor 315₁, as it does not "know" whether the requested data was retrieved from local memory, from the network memory controller cache memory 360₁ or from the server memory 385.

Whereas the cache 325₁ attached to or integral with the processor 315₁ may be on the order of a few hundreds of kilobytes of static RAM, the network memory controller cache memory 360₁ of the network memory controller 340₁ according to the present invention, may be much larger. For example, the network memory controller cache memory 360₁ may be at least an order of magnitude larger in size than that of the cache 325₁. For example, the cache memory 360₁ of the network memory controller 340₁ may be about 4 to about 64 Mbytes in size. Even larger network memory controller cache memories may be indicated whenever it is desirable to store large portions of code and/or data locally. However, that size of network memory controller cache memory, according to the present invention, efficiently provides a window into a much larger memory space within the memory server, and efficiently operates such that up to 99% of read and write requests made by the processor are satisfied by the network memory controller cache memory, and do not require an access across the network.

The size of the server memory 385 of the memory server 375 is preferably quite large. Indeed, the server memory 385 of the memory server 375 may be several orders of magnitude larger than the cache memory 360₁ of the network memory controller 340₁. For example, the server memory 385 may be measured, for example, in hundreds of megabytes or gigabytes, depending principally on the memory requirements and number of memory clients connected thereto through the network 399. The respective sizes of the network memory controller cache memories 360₁, ... 360_{N} and the server memory 385 indicated above are believed to be consistent with the presently preferred embodiments of the present invention. However, it is to be understood that the present invention is readily scalable to smaller or larger memory sizes, in terms of both network memory controller cache memory and server memory. Therefore, the respective sizes of the various memories disclosed herein should be adapted to the requirements of the constituent memory clients and/or memory servers in question.

By the methods and computing device and network architectures disclosed herein, a client's network memory controller cache memory 360₁, 360₂ ... 360_{N} of a few megabytes in size may provide efficient and economical access to one or more large (hundreds of Mbytes or several Gbytes) server memories, such as server memory 385 within memory server 375. The network memory controller cache memories 360₁, 360₂ ... 360_{N} may be made of DRAM, and may thus be fabricated at low cost, as compared to conventional cache memories such as 325₁, which are typically made of static RAM, or SRAM.

According to the present invention, copies of frequently accessed memory locations are stored in the network memory controller cache memory 360₁, where they may be rapidly accessed by the network memory controller 340₁ and thus rapidly provided to the processor 315₁ and/or other processors attached to the processor bus 305₁, such as processor(s) 316₁. Hierarchically, the network memory controller cache memory 340₁, residing on the processor/memory bus 305₁, sits at the same level, from the processor's point of view, as conventional RAM (such as shown at 135 in Fig. 1), and is treated as such by the processor 315₁. That the computing device 302₁ contains no local RAM memory or contains only a small amount of such local memory is wholly transparent to the processor 315₁. Indeed, memory accesses are performed, from the processor 315₁ and/or 316₁'s point of view, in the same manner as with conventional computers or workstations. This process is also transparent the operating system and to the user, but for the ability of a low cost computing device 302₁ according to the present invention to access a large memory space, the size of which is only limited by the addressing scheme utilized and the amount of server memory 385 available in the memory server 375.

According to the present invention, several computing devices 302₁, 302₂ ... 302_{N} may run a single copy of an application stored in the remote server memory 385. As the code portion of the application is never modified by any of the computing devices 360₁, 360₂ ... 360_{N}, the code portion of the application may be simultaneously mapped to any or all of the attached computing devices, whether they are currently operating as client computers or as memory servers.

By locating memory (RAM and/or ROM) remotely from the computing devices 302₁, 302₂ ... 302_{N}, the cost of such devices is reduced, while their functionality is increased. Indeed, each of the computing devices 302₁, 302₂ ... 302_{N}, therefore, has access to the large server memory 385 on the memory server 375 without, however, incurring the costs involved in installing a like amount of memory for each of these devices. This leads to a much more efficient use of memory resources, as the server memory 385 is potentially shared by some or all of the plurality of networked computing devices 302₁, 302₂ ... 302_{N}.

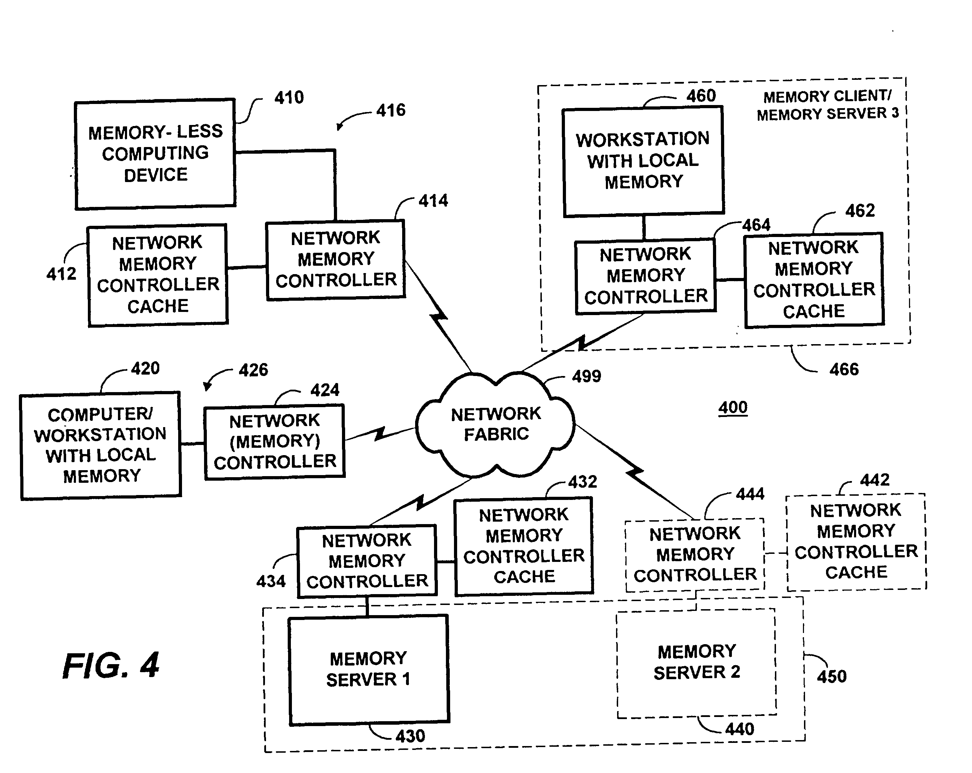

Fig. 4 shows several preferred embodiments of the network of computing devices according to the present invention. Fig. 4 shows a network 400 of interconnected devices 416, 426 and 466, such as personal computers, workstations and other devices or appliances having some kind of processing engine. The devices 416, 426, 466 are connected to one another and to a memory server 430 via a network fabric 499.

According to one embodiment of the present invention, the device 416 includes a memory-less computing device 410, meaning a computing device that does not include any local RAM physically connected thereto. Attached to the computing device 410 is a network memory controller 414. The network memory controller 414, in the same manner as the network memory controllers 464, 434 and 444, controls access to its associated network memory controller cache memory. Connected to or included within the network memory controller 414 is the network memory controller cache memory 412. The network memory controller cache's size may be on the order of at least a few Mbytes. As the memory-less computing device 410 does not include any local memory such as RAM (although it may include one or more storage devices, such as a disk drive), the computing device 410 must depend upon the cache memory 412 of its associated network memory controller 414 for its random access and temporary storage needs. To do this, the network memory controller 414 accesses the memory server 430 through the network fabric 499, which is itself connected to a network memory controller 434. The network memory controller 434 of memory server 430, as well as the network memory controller 444 of the memory server 440 may include a network memory controller cache memory 432, 442 therein or attached thereto. The network memory controllers 434, 444 of the memory servers 430, 440, respectively, are configured to supply contents of lines of server memory across the network when requested by the network memory controller of a client.

A computing device 426, according to the present invention, may also be connected to the network fabric 499, and may include a computer/workstation 420. The computer/workstation 420, as are the computing devices 416, 466 and 450, is connected to the network fabric 499 through a conventional network controller (as shown in Fig. 2) residing on the I/O or PCI bus. The computer/workstation 420, however, is also connected to the network fabric 499 through a network memory controller 424. Unlike the memory client device 416, the memory client device 426 includes local memory physically attached thereto, and may have a structure similar to that shown in Fig. 1. If the device 426 functions as a memory client, at least a portion of the local memory attached to the computer/workstation 420 may be mapped to the server memory of the first memory server 430 and utilized to store copies of memory locations retrieved therefrom. In operation, such a client, during a memory access operation, will check its local memory for the required memory location. If the requested memory location is present in its local memory, it will access that memory location and complete the memory access operation locally (i.e., internally to the computer/workstation 420), without accessing the server memory of the first memory server 430. If, however, the requested memory location is not present within its local memory, the computer/workstation 420 may access the server memory of the first memory server 430 via the network memory controller 424 residing on its processor or memory bus, the network fabric 499 and the first memory server 430's network memory controller 434. It is, therefore, consistent with the present invention for the device 416 to have access to both its own local memory as well as to the server memory of the memory server 430.

This ability to function both as a conventional self contained (albeit networked) computing device as well as a memory client offers great flexibility and functionality. Indeed, according to the present invention, conventional computing devices may be readily connected to the network 400 and benefit from the ability to access the large amount of server memory (which may include both RAM and ROM) from the first memory server 430 through the network fabric 499. For example, the computing device may have 32 Mbytes of local memory attached thereto. This 32 Mbytes of RAM may provide all of the memory needs of the computing device 420 and all of its memory access operations may be carried out by accessing solely the local memory attached to the computing device 420. Alternatively, the 32 Mbytes of local RAM may be utilized as a very large cache memory by mapping all or a portion thereof to the server memory of the memory server 430. In that case, should the requested memory location not be found within the 32 Mbytes of local RAM, the network memory controller 424 will access the server memory of the memory server 430, retrieve a copy thereof and copy it within the 32 Mbytes of local RAM of the computer/workstation 420. By providing high-speed access to the server memory of the first memory server 430, the computer/workstation 420, in this manner, need not swap pages of memory to a comparatively slow device, such as a magnetic hard disk drive. As alluded to above, swap files stored on local disk often depend upon some form of electro-mechanical mechanism to storage and access information. In the case of a magnetic hard disk drive, for example, storage and access to such swap files are inherently limited to the speed of the head stack assembly of the drive, which is typically measured in milliseconds. Access to the server memory, on the other hand, may be several orders of magnitude faster than the typical access time of a hard disk drive depending, for example, on the speed of the server memory and the implemented network protocol.

Device 466, illustrating yet another embodiment and additional features of the present invention, includes a workstation 460 having local user-accessible memory. Attached to the workstation 460 is a network memory controller 464. Network memory controller cache memory 462 may be attached to the network memory controller 464 or may be integral therewith. The device 466 may function as a memory client to the first memory server 430 in the same manner as the computing device 416. An extended discussion of the operation of the device 466 as a memory client is, therefore, omitted.

The device 466, by virtue of its attached local memory, may also function as a memory server, providing access to its own local memory to other devices, such as memory client 416, through the network fabric 499. Indeed, device 466 may function as a memory client during one operation and function as a memory server in a next operation. As a memory server, at least a portion of the local memory or network memory controller cache memory of one or more another client device or devices, such as computing device 410 and/or 420, may be mapped to the local memory of the workstation 460, now operating as server memory. Also, while a first portion of the network memory controller cache memory 412 of the device 416 may be mapped to the local memory of the workstation 460, a second portion thereof may be mapped to the server memory of the first memory server 430. The workstation 460, therefore, may function both as a memory client and as a memory server. Logically, any device that provides access, consistent with the present invention, to its local memory over the network fabric 499 may be thought of as a memory server, whereas any device that accesses the local memory of another device may be termed a memory client.

As the workstation 466 includes local memory, network memory controller cache memory 462 and has access to the server memory of the first memory server 430, access cycles for the computing device 420 may be satisfied in one of three ways. If the address of the access is determined to map to local memory, then the access is satisfied locally from local memory. If the address of the access is determined to map to remote memory, and further is determined to be contained within the network memory controller cache memory, then the access is satisfied locally from the network memory controller cache memory. If the access is determined to map to remote memory, and further is determined not to be contained within the network memory controller cache memory, the memory contents are retrieved from the memory server, are returned to the computing device and are simultaneously placed into the network memory controller cache memory. Alternatively, the local memory of the workstation 466 may be used for an altogether specific purpose and may be treated entirely separately from the network memory controller cache memory 462 and the server memory of the memory server 430.

A plurality of memory servers may be included within a single network 400. For example, a second memory server 440 may also be present in the network 400. This second memory server 440 may have a network memory controller 444 attached thereto, giving the devices 416, 426 and/or 466 access to its server memory. The memory spaces of the first memory server 430 and of the second memory server 440 may be logically contiguous relative to one another, whereby the total memory space available appears, to the client devices, to be a single block of memory whose size is the sum of the first memory server 430 and the second memory server 440. This aggregation provides the memory clients access to very large memory arrays, potentially on the order of several Gigabytes or greater. Alternatively, the memory spaces of the memory servers 430, 440 may be non-contiguous. Separate memory servers may store different classes of applications and/or operating systems.

The ability to place several memory servers 430, 440 onto the network 400 allows their operation to be highly optimized. For example, both read only and read-write memory may be maintained on one or more servers. For example, each server may contain both RAM and read only memory (ROM). Operating systems, as well as applications, require both code regions and data regions in memory. The segments of memory where executable code is stored are never modified, whereas the segments of memory dedicated to the data sections are modified as needed during the running of the operating system or application. According to the present invention, multiple client devices may map to the same application or operating system code memory segment, as these regions are read only. Therefore, instead of potentially having multiple copies of the same application or operating system stored on each machine in a network, a single copy stored on a memory server may efficiently serve all of the client devices and memory servers on the network. Such a multiple mapping provides for very efficient utilization of server memory and also provides a clean, efficient and economical way to maintain the software for each client, as a software update to a population of clients only requires that the new software be loaded on the memory server.

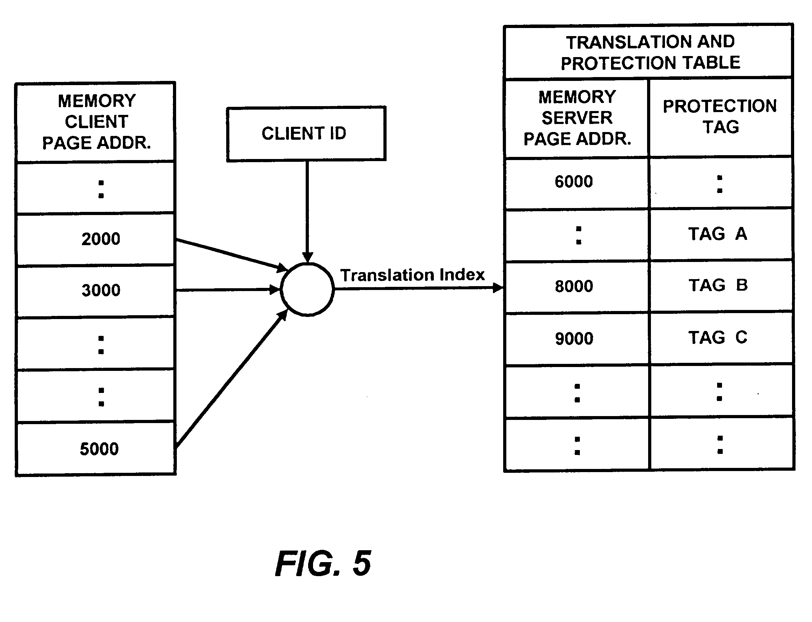

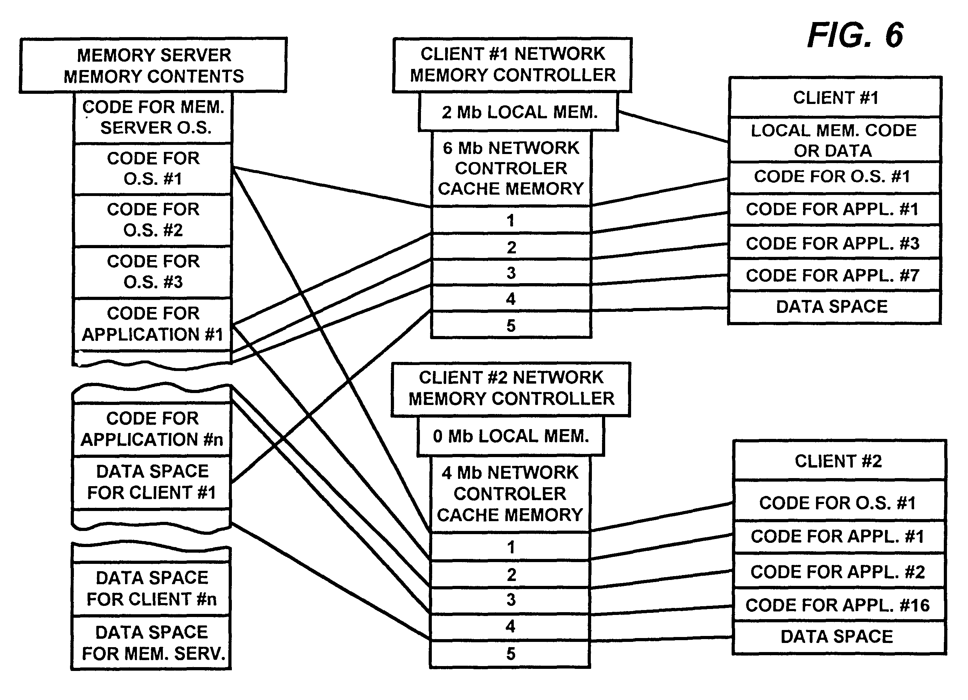

Figs. 5 and 6 illustrate the manner in which the memory space of a client device may be mapped into a memory server's address space and how that address space may be subsequently accessed by the memory client, according to the present invention. In particular, Fig. 5 shows a schematic of the manner in which memory client page addresses may be translated to memory server page addresses. As shown in Fig. 5, the address space for the memory client may be divided into a number of memory segments spanning a range of memory addresses. Such segments may be called pages. Each page of memory of the memory client may be given a unique page address, of which three (memory page addresses 2000, 3000 and 5000) are shown in Fig. 5 for illustrative purposes. Each of these pages of client memory is assigned a unique client identifier, or client ID. Therefore, the address of each page of memory of each memory client, when combined with the unique client ID, uniquely distinguishes that page of client memory from among all other pages of all other memory clients. Therefore, the combination of the client page address and the client ID provides a useful index for translating between the address of a page of memory in the client address space to a corresponding address of a page of server memory within the memory server address space. To map the address of a page of memory from a memory client to a corresponding page of memory in the server memory of the memory server, an entry in a translation table maintained in the memory server is allocated to the memory client page address. This entry in the translation table contains the address of the memory server page of memory corresponding to the address of the memory client page. Thereafter, when a request for access to a particular page of memory stored within a memory server is received from a memory client, the memory server utilizes the translation index to determine the appropriate physical address corresponding to the page of server memory that the client has requested. As the translation index uniquely identifies a particular page of memory from a particular memory client, retrieval of the correct physical address within the memory server is always assured.

For security purposes and to establish differing levels of permission with regard to access rights in such an environment, protection tags may be used. Protection tags may be set by the memory client, by the memory server or by some coordinated activity between both the memory client and the memory server, and may establish the rights of access to the information stored within any page of client memory. These tags may also be stored within the translation table, which may then be called a translation and protection table, or TPT. Such a protection tag may be associated with each page or segment entry in the TPT. When a request for access to a particular page or segment is received from a memory client, the translation index is calculated by combining the address of the page or segment requested by the client and the client's unique ID. This translation index is then used by the memory server to look up the corresponding server side physical page or segment address and to check the requested operation against the contents of the corresponding protection tag field. If the protection tag allows the type of operation requested by the client, access to that particular memory server page address is authorized, and the requested operation is carried out.

According to one embodiment of the present invention, in operation, the network memory controller of a memory client receives an address from the processor of the client. The network memory controller checks the contents of the cache memory of the network memory controller to determine whether the requested address is present therein. If the requested address is indeed present in the network memory controller cache, then the contents thereof are provided to the requesting processor directly from the network memory controller cache of the network memory controller. If the requested address in not in the network memory controller cache, then the network memory controller sends the requested address to the memory server along with the client ID, in the form of a translation index. The memory server then consults its TPT and checks that the client has permission to access the addressed page of memory and performs the translation necessary to access the requested address. The memory access is then performed on the server, and the requested memory location is then returned to the requesting client's network memory controller. The requesting client's network memory controller then places a copy of the requested address in its network memory controller cache memory and returns the contents of the requested memory address to the requesting processor, to complete the operation.

Fig. 6 schematically represents a memory server and two memory clients attached thereto. The two memory clients, identified in Fig. 6 as client #1 and client #2, are connected, via their respective network memory controllers (not shown in Fig. 6) to server memory that is physically resident on the memory server. At least a portion of the memory spaces of client #1 and client #2 are mapped to the server memory of the memory server. Client #1, in this example, has 2 Mb of local memory and 6 Mb of network memory controller cache memory. Client #2 does not include any local memory and has 4 Mb of network memory controller cache memory. As shown schematically by the boxes numbered 1-5 below each of the network memory controller cache memories of client #1 and client#2, pages, or segments of the physical memory space of each client are mapped to various pages or segments of the server memory, in the manner described relative to Fig. 5. In Fig. 6, the mapping from the client #1 and client #2 to the memory server is represented by the lines joining the segments. The contents of the various cache memory segments are shown in the tables to the right of the schematic representation of client #1 and client #2.

As shown in Fig. 6, the 2Mb of local memory in client #1 may be used for storing and accessing code or data stored therein. In contrast, all of the code or data required by client #2 is accessed via the network memory controller cache memory of its network memory controller. In the illustrative example of Fig. 6, Client # 1 and client #2 are each running the same operating system and are each running a set of application programs. Indeed, the first segment of the network memory controller cache memory of both client #1 and client #2 is mapped to the address space in the server where operating system (O.S.) #1 is stored. Since the code for operating systems typically is not changed by the clients, the same address space may be mapped to both client #1 and client #2. Likewise, both client #1 and client #2 are running Application #1, the code portion of which is stored within the server memory of the memory server. Segments 2 of both clients shown in Fig. 6 are, therefore, mapped thereto. Segments 3 and 4 of the network memory controller cache memory of client #1 are mapped to the address space within the server memory where the code for applications #3 and #7 are stored, respectively. Likewise, segments 3 and 4 of the network memory controller cache memory of client #2 are mapped to the address space within the server where the code for applications #2 and #16 are stored, respectively. Finally, in the example shown in Fig. 6, the 5^{th} segment of the network memory controller cache memory of client #1 is mapped to the address space within the server memory allocated as data space for client #1. Likewise, the 5^{th} segment of the network memory controller cache memory of client #2 is mapped to the address space within the server memory allocated as data space for client #2.

As can be seen, the memory clients may be equipped with little or no local memory, and yet operate efficiently by using a large (generally, at least 4 Mb) network memory controller cache memory. This large network memory controller cache memory provides fast access to the most frequently used cached lines of the mapped application, data and/or operating system code. A low cost memory client can, according to the present invention, be logically operating with hundreds of megabytes of memory or more, although it may have no local memory (such as RAM) of its own. In this manner, a relatively small and inexpensive network memory controller cache memory provides an access window into a much larger memory range on the memory server. A single memory client may be mapped to the server memory of more than one server, providing scalability and the ability to concentrate specific sets of applications on specific memory servers.

Moreover, the mapping from memory client to memory server may be implemented dynamically, according to usage requirements, time restraints, permission levels or most any other criteria. Thus, an extremely versatile, fluid and resource efficient memory management scheme may be implemented, to allocate memory resources when and where they may be most efficiently utilized without incurring the often prohibitive costs of purchasing, installing and maintaining needlessly duplicative memory resources

While accessing server memory is a great deal faster than accessing swapped pages of memory on, for example, a hard disk drive, it is nevertheless somewhat slower than accessing local memory. However, the trend in modern processing engines appears to be a greater tolerance for latency, in that the performance of modern microprocessor tends to decrease very little with slightly longer memory access cycles. This is primarily due to the fact that processor speeds have generally outpaced memory speeds. The present invention exploits this trend by copying significant address ranges in the network memory controller cache memory whenever an access to server memory is made. It is evident that the larger the network memory controller cache, the more infrequent the server memory accesses will be. Thus, with increased latency tolerance and relatively infrequent memory server accesses, the performance of computing devices in such a network and according to the present invention, will remain excellent. Indeed, the majority of memory accesses will typically find the requested address to already have been copied within the network memory controller cache, resulting in fast access times.

The preferred network communication protocol utilized by the network fabric, according to the present invention, may be any protocol that is efficient at moving data of the same size and format as the cache line used by the processors in the computing devices and/or the memory server(s). Preferably, such a network protocol will be efficient in moving small data packets about the network with a minimum of overhead, such as long header strings. Preferably, such a protocol would also provide very reliable guaranteed delivery of the data packets to their destination, such as the server memory or the network memory controller caches. Preferably, integrity of the data packets should also be assured using, for example, a cyclic redundancy code (CRC). Therefore, any network communication protocol that possesses all or most of these attributes will function well within the context of the present invention. An example of such a protocol is SerialExpress, or variants of such other protocols such as the IEEE Standard 1596 Scalable Coherent Interface (SCI) or the IEEE Standard 1394 High Performance Serial Bus.

While the foregoing detailed description has described several embodiments of this invention, it is to be understood that the above description is illustrative only and not limiting of the disclosed invention. For example, the memory mapping and address translation schemes may vary from that described and illustrated herein, without, however, departing from the spirit and scope of the present invention. A number of other modifications will no doubt occur to persons of skill in this art. All such modifications, however, should be deemed to fall within the scope of the present invention. Thus, the invention is to be limited only by the claims as set forth below.

## Claims

1. A network of computing devices, comprising:
at least one memory server computing device, each memory server including server memory;
at least one client computing device, each client having at least a portion of its memory space mapped into a memory space of at least one of the memory servers;
a network memory controller attached to each client, the network memory controller being configured to access the server memory of at least one of the memory servers over the network and including a network memory controller cache memory for storing copies of memory locations fetched from the server memory; and
a network memory controller attached to each memory server, the network memory controller of the memory server being configured to supply contents of lines of server memory across the network when requested by the network memory controller of a client.

2. The network of claim 1, wherein the network memory controller of the memory server includes cache memory for storing copies of memory locations accessed over the network.

3. The network of claim 1, wherein at least one client is constructed without random access memory and wherein all of a memory space of the memory-less client is mapped into a memory space of the server memory of at least one of the memory servers.

4. The network of claim 1, wherein at least one client includes random access memory physically connected thereto.

5. The network of claim 4, wherein the at least one client including random access memory functions as a memory server for at least one client on the network.

6. The network of claim 1, wherein the cache memory comprises dynamic random access memory.

7. The network of claim 1, wherein the server memory comprises at least one of read only and read-write memory to which at least a portion of the memory space of the at least one client computing device is mapped.

8. The network of claim 1, wherein the read only memory of the memory server stores at least one of application code and operating system code, thereby reducing local storage requirements in the at least one client computing device.

9. The network of claim 1, wherein at least one segment of the server memory is designated as client accessible data space, each segment being accessible to at least one client and utilized as a temporary random access data storage area.

10. A method of allocating and managing memory resources in a network of computing devices, each of the computing devices including a network memory controller having cache memory, comprising the steps of:
mapping at least a portion of a memory space of at least one of the computing devices into a memory space of at least one other computing device within the network;
responding to a request for access to a memory location from a computing device by first checking the cache memory of its associated network memory controller for the requested memory location; and
accessing the memory of the at least one other computing device when the requested memory location is not present in the requesting computing device's network memory controller's cache memory.

11. The method of claim 10, further comprising the step of returning a content of the requested memory location to the requesting computing device when the requested memory location is present in the requesting computing device's network memory controller's cache memory.

12. The method of claim 10, further comprising the step of returning a content of the requested memory location from the random access memory of the at least one other computing device to the requesting computing device when the requested memory location is not present in the requesting computing device's network memory controller's cache memory.

13. The method of claim 12, further comprising the step of storing a copy of the requested memory location returned from the random access memory in the requesting computing device's network memory controller's cache memory.

14. The method of claim 10, wherein the accessing step includes a step of combining the requested memory location with a unique client identifier.

15. A computing device, comprising:
at least one processor
a processor bus, the processor bus being connected to said at least one processor; and
a network memory controller attached to the processor bus; the network memory controller being configured to access memory physically remote from the computing device over a communication link and including a cache memory for storing copies of memory locations accessed from the remote memory, the network memory controller being configured to respond to all requests for access to memory locations by accessing the remote memory over the communication link unless the cache memory includes a copy of the requested memory locations.

16. The computing device of claim 15, wherein no local random access memory is physically connected to the processor bus and wherein all memory accesses are carried out by the network memory controller.

17. The computing device of claim 15, further comprising local random access memory and wherein the network memory responds to all requests for access to memory locations by accessing the remote memory over the communication link unless one of the cache memory and the local random access memory includes a copy of the requested memory locations.
